# DEMANDE DE BREVET EUROPEEN

(11) **EP 4 542 188 A1**
(43) Date de publication de la demande: **23.04.2025**
(21) Numéro de dépôt: 24207156.1
(22) Date de dépôt: 17.10.2024
(51) Int. Cl.: G01J 5/20, G01J 5/22

(54) **DETECTEUR THERMIQUE COMPORTANT UN TRANSDUCTEUR THERMOMETRE A DIODES**

(30) Priorité: 20.10.2023 FR 2311415
(71) Demandeur: Commissariat à l'Energie Atomique et aux Energies Alternatives, 75015 Paris (FR)
(72) Inventeur: FOURNOL, Adrien, 38054 Grenoble cedex 09 (FR); ALIANE, Abdelkader, 38054 Grenoble cedex 09 (FR); DUSSOPT, Laurent, 38054 Grenoble cedex 09 (FR)
(74) Mandataire: Brevalex

(57) **Abrégé**

L'invention porte sur un détecteur thermique comportant : un substrat de lecture (10), comportant un circuit de lecture (12) ; et une membrane absorbante (30), suspendue au-dessus du substrat de lecture (10) et isolée thermiquement de celui-ci, et comportant un transducteur thermomètre connecté électriquement au circuit de lecture (12). Le transducteur thermomètre est formé de plusieurs diodes thermomètres (D1, D2) connectées en parallèle, et le circuit de lecture (12) est adapté à activer les diodes thermomètres (D1, D2) de manière sélective. Les diodes thermomètres (D1, D2) et le circuit de lecture (12) sont configurés de manière à présenter au moins les deux configurations électriques suivantes : une configuration où un courant électrique total I_{d} circulant dans le transducteur thermomètre présente une première valeur I_{d,1} ; et une autre configuration où le courant électrique total I_{d} présente une deuxième valeur I_{d,2} différente de I_{d,1}.

## Description

### DOMAINE TECHNIQUE

Le domaine de l'invention est celui des détecteurs thermiques d'un rayonnement électromagnétique, par exemple térahertz ou infrarouge, comportant une membrane suspendue au-dessus d'un substrat de lecture où se situe un transducteur thermomètre formé d'au moins une diode.

### ÉTAT DE LA TECHNIQUE ANTÉRIEURE

Les détecteurs thermiques d'un rayonnement électromagnétique, par exemple térahertz ou infrarouge, peuvent comporter une membrane absorbante suspendue au-dessus d'un substrat de lecture et thermiquement isolée de ce dernier. La membrane absorbante comporte un absorbeur du rayonnement électromagnétique à détecter, et un transducteur thermomètre, relié thermiquement à ce dernier, dont une propriété électrique varie en fonction de son échauffement. Un tel transducteur thermomètre peut être une thermistance (par exemple, un oxyde de vanadium ou de titane, voire du silicium amorphe), une diode (jonction pn ou pin), voire encore un transistor métal oxyde semiconducteur à effet de champ (MOSFET).

Une diode thermomètre présente l'avantage de pouvoir présenter une résolution thermique ΔTₘᵢₙ faible par rapport aux autres types de transducteur thermomètre, ce qui confère au détecteur thermique une haute sensibilité en termes de puissance minimale détectable (MDP, pour *Minimum Detectable Power,* en anglais). Cependant, la résolution thermique ΔTₘᵢₙ de la diode thermomètre dépend notamment de son point de polarisation en I_{d}(V_{d}). Par ailleurs, le courant électrique I_{d} traversant la diode thermomètre conduit à une dissipation de chaleur par effet Joule, ce qui génère un auto-échauffement de la membrane absorbante. Cet auto-échauffement améliore la sensibilité du détecteur thermique, mais dégrade sa rapidité en termes de temps de réponse thermique effectif τ_{th,eff}. Aussi, il apparaît qu'il n'est pas possible d'optimiser l'un de ces paramètres de performance (sensibilité et rapidité) sans dégrader le second.

Par ailleurs, lors de la fabrication d'un détecteur thermique, on dimensionne habituellement la diode thermomètre de manière à obtenir une résolution thermique ΔTₘᵢₙ faible et en faisant un compromis pour obtenir une sensibilité et une rapidité suffisantes (ou en privilégiant la sensibilité ou la rapidité). Lors du fonctionnement du détecteur thermique, il n'est pas possible d'ajuster ses performances en termes de sensibilité et de rapidité pour s'adapter aux besoins souhaités, si ce n'est en modifiant la tension de polarisation V_{d} de la diode thermomètre, mais cela conduit alors à une dégradation de sa résolution thermique ΔTₘᵢₙ, et donc de la sensibilité du détecteur thermique.

### EXPOSÉ DE L'INVENTION

L'invention a pour objectif de remédier au moins en partie aux inconvénients de l'art antérieur, et plus particulièrement de proposer un détecteur thermique d'un rayonnement électromagnétique, par exemple un rayonnement térahertz ou infrarouge, qui présente des performances améliorées, en particulier qui permet d'ajuster les performances de manière contrôlée, pour ainsi privilégier la sensibilité ou la rapidité du détecteur thermique, sans pour autant dégrader la résolution thermique du transducteur thermomètre.

Pour cela, l'objet de l'invention est un détecteur thermique d'un rayonnement électromagnétique, comportant : un substrat de lecture, comportant un circuit de lecture ; et une membrane absorbante, suspendue au-dessus du substrat de lecture et isolée thermiquement de celui-ci, et comportant un transducteur thermomètre connecté électriquement au circuit de lecture et polarisé par ce dernier en tension à une valeur V_{d}. Le transducteur thermomètre est couplé thermiquement à la membrane absorbante.

Selon l'invention : le transducteur thermomètre est formé de plusieurs diodes thermomètres connectées en parallèle et couplées thermiquement l'une à l'autre ; le circuit de lecture est adapté à activer les diodes thermomètres de manière sélective ; et les diodes thermomètres et le circuit de lecture sont configurés de manière à présenter au moins les deux configurations électriques suivantes (selon que toutes ou une partie des diodes sont activées) : une première configuration où un courant électrique total I_{d} circulant dans le transducteur thermomètre polarisé à la tension V_{d} présente une première valeur I_{d,1} ; et une deuxième configuration où le courant électrique total I_{d} présente une deuxième valeur I_{d,2} différente de I_{d,1}.

Certains aspects préférés mais non limitatifs de ce détecteur thermique sont les suivants.

Les diodes thermomètres peuvent être des diodes latérales comportant chacune deux régions latérales dopées et une région centrale située, dans un plan parallèle au plan principal de la membrane absorbante, entre les deux régions latérales dopées. Elles peuvent présenter une largeur différente d'une diode à l'autre.

Les diodes thermomètres peuvent être réalisées en le même matériau semiconducteur cristallin.

Les diodes thermomètres peuvent être montées de manière symétrique, et peuvent présenter chacune une largeur identique ou non d'une diode thermomètre à l'autre.

Les diodes thermomètres peuvent être montées de manière antisymétrique, et peuvent présenter chacune une largeur différente d'une diode thermomètre à l'autre.

La membrane absorbante peut être maintenue suspendue par des bras d'isolation thermique s'étendant jusqu'à des piliers d'ancrage, et des pistes conductrices de polarisation peuvent s'étendre à partir des piliers d'ancrage en passant par les bras d'isolation thermique pour venir au contact électrique des diodes thermomètres.

Une même piste conductrice de polarisation peut être au contact électrique d'une anode ou d'une cathode d'au moins deux diodes thermomètres connectées selon un montage symétrique.

Une même piste conductrice de polarisation peut être au contact électrique d'une anode et d'une cathode d'au moins deux diodes thermomètres connectées selon un montage antisymétrique.

Le circuit de lecture peut comporter au moins un interrupteur ou au moins un va-et-vient connecté aux diodes thermomètres pour activer les diodes thermomètres de manière sélective.

Le détecteur thermique est de préférence adapté à détecter un rayonnement térahertz ou un rayonnement infrarouge.

### BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :
la figure 1A est une vue schématique et partielle, en coupe transversale, d'un détecteur thermique selon un mode de réalisation, ici dans le cas d'un détecteur thermique d'un rayonnement térahertz ;
la figure 1B est une vue schématique et partielle, en vue de dessus, du détecteur thermique illustré sur la fig.1A ;
la figure 1C illustre le circuit électrique équivalent des diodes thermomètres et du circuit de lecture du détecteur thermique illustré sur la fig.1B ;
la figure 2A est une vue schématique et partielle, en vue de dessus, d'un détecteur thermique selon une variante de réalisation ;
la figure 2B illustre le circuit électrique équivalent des diodes thermomètres et du circuit de lecture du détecteur thermique illustré sur la fig.2A ;
la figure 3A est une vue schématique et partielle, en vue de dessus, d'un détecteur thermique selon une autre variante de réalisation ;
la figure 3B illustre le circuit électrique équivalent des diodes thermomètres et du circuit de lecture du détecteur thermique illustré sur la fig.3A ;
la figure 4A est une vue schématique et partielle, en vue de dessus, d'un détecteur thermique selon une autre variante de réalisation ;
la figure 4B illustre un exemple d'évolution du gain d'auto-échauffement g_{AE} en fonction de la largeur totale des diodes thermomètres polarisées, dans le cas du détecteur thermique de la fig.4A.

### EXPOSÉ DÉTAILLÉ DE MODES DE RÉALISATION PARTICULIERS

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

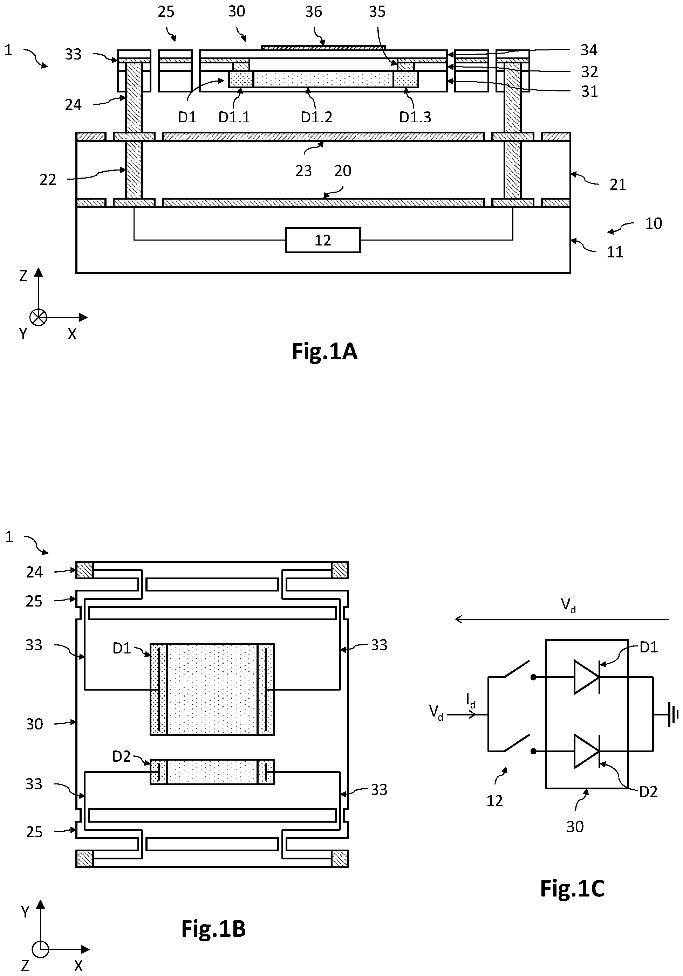

Les figures 1A et 1B sont des vues schématiques et partielles d'un détecteur thermique 1 selon un mode de réalisation, en coupe transversale (fig.1A) et en vue de dessus (fig.1B). La figure 1C illustre un circuit électrique équivalent des diodes thermomètres D1, D2 et du circuit de lecture 12.

D'une manière générale, le détecteur thermique 1 selon l'invention est adapté à absorber un rayonnement électromagnétique, par exemple dans la gamme térahertz ou infrarouge. Le détecteur thermique 1 peut ainsi être particulièrement adapté à détecter un rayonnement térahertz dont une longueur d'onde centrale λ_{c} est comprise dans une gamme spectrale prédéfinie allant de 0.1mm à 1mm environ (gamme spectrale comprise entre 0.3 et 3THz environ), voire à détecter un rayonnement infrarouge par exemple de la gamme LWIR (*Long Wavelength Infrared,* en anglais) dont la longueur d'onde est comprise entre 8µm et 14µm environ.

Dans cet exemple, le détecteur thermique 1 est adapté à détecter un rayonnement térahertz. Il peut appartenir à une matrice de détecteurs thermiques identiques agencés mutuellement suivant un pas de l'ordre par exemple de 50µm. Est représenté ici uniquement l'un des pixels de détection de la matrice de détecteurs thermiques. Par ailleurs, le détecteur thermique 1 comporte une membrane absorbante 30 suspendue au-dessus d'un substrat de lecture 10 et isolée thermiquement de celui-ci. La membrane absorbante 30 comporte un transducteur thermomètre formé de plusieurs diodes thermomètres connectées en parallèle par le circuit de lecture, ici les diodes D1 et D2. La configuration de la membrane absorbante 30 et des diodes thermomètres D1, D2 est décrite ici à titre illustratif : comme expliqué plus loin, d'autres configurations sont possibles.

On définit ici et pour la suite de la description un repère direct tridimensionnel XYZ, où le plan XY est sensiblement parallèle au plan du substrat de lecture 10, l'axe Z étant orienté suivant une direction sensiblement orthogonale au plan du substrat de lecture 10 en direction de la membrane absorbante 30. Les termes « inférieur » et « supérieur » s'entendent comme étant relatifs à un positionnement croissant lorsqu'on s'éloigne du substrat de lecture 10 suivant la direction +Z.

Le détecteur thermique 1 comporte un substrat fonctionnalisé 10, dit substrat de lecture, réalisé dans cet exemple à base de silicium, comportant un circuit de lecture 12 permettant la commande et la lecture des détecteurs thermiques. Le circuit de lecture 12 se présente ici sous la forme d'un circuit intégré CMOS situé dans un substrat support 11. Il comporte des portions de lignes conductrices (non représentées), par exemple métalliques, séparées les unes des autres par un matériau électriquement isolant, par exemple un matériau minéral à base de silicium tel qu'un oxyde de silicium SiOₓ, un nitrure de silicium SiNₓ, ou leurs alliages. Il peut également comporter des éléments électroniques actifs (non représentés), par exemple des diodes, transistors, ou des éléments électroniques passifs, par exemple des condensateurs, résistances..., connectés par des interconnexions électriques à la membrane absorbante 30 d'une part, et à un plot de connexion (non représenté) d'autre part, ce dernier étant destiné à connecter le détecteur thermique 1 à un dispositif électronique externe.

Comme détaillé par la suite, le circuit de lecture 12 est adapté à polariser en tension le transducteur thermomètre à une valeur V_{d} prédéfinie, laquelle peut être choisie pour optimiser la résolution thermique ΔTₘᵢₙ. De plus, le transducteur thermomètre étant formé de plusieurs diodes thermomètres connectées en parallèle (ici les diodes D1 et D2), le circuit de lecture 12 est adapté à activer les diodes thermomètres (c'est-à-dire à les polariser dans le sens passant) indépendamment les unes des autres, c'est-à-dire de manière sélective. Pour cela, le circuit de lecture comporte un ou plusieurs interrupteurs ou va-et-vient. Ainsi, une diode non activée est, soit non polarisée, soit polarisée dans le sens bloquant : dans les deux cas, elle n'est pas ou quasiment pas traversée par un courant électrique.

Le détecteur thermique 1 comporte de préférence un réflecteur 20, réalisé en au moins un matériau réfléchissant vis-à-vis du rayonnement térahertz à détecter. Il repose ici sur la surface d'une couche isolante du substrat de lecture 10. En variante, il peut être formé d'une portion de la ligne conductrice du dernier niveau d'interconnexion électrique du circuit intégré CMOS, et donc être situé dans le substrat de lecture 10.

Le substrat de lecture 10 et le réflecteur 20 sont ici recouverts par une couche isolante 21 réalisée en un matériau diélectrique, comme un oxyde de silicium. Cette couche isolante 21 permet notamment d'adapter la hauteur d'une cavité formée entre le réflecteur 20 et une surface à haute impédance 23. Son épaisseur peut être ajustée pour optimiser l'absorption du rayonnement à détecter par un absorbeur 36 situé sur la membrane absorbante 30. Elle peut ainsi être sensiblement égale à À/4n où λ est une longueur d'onde de référence du rayonnement térahertz à détecter et où n est l'indice de réfraction de la couche isolante 21.

Le détecteur thermique 1 comporte ici des piliers de connexion 22, réalisés en un matériau électriquement conducteur, qui traversent la couche isolante 21 et assurent la connexion électrique entre des piliers d'ancrage 24 et le circuit de lecture 12.

Le détecteur thermique 1 comporte ici une surface à haute impédance (HIS) 23, adaptée à réfléchir sans déphasage le rayonnement térahertz à détecter. Elle est située sous la membrane absorbante 30 et à distance de celle-ci suivant l'axe Z, et est couplée à un absorbeur 36 situé sur la membrane absorbante 30, ici un dipôle résistif. Dans cet exemple, la surface à haute impédance 23 repose sur le substrat de lecture 10, et ici sur la couche isolante 21. Elle est espacée du réflecteur 20 et de l'absorbeur 36 d'une distance permettant d'optimiser l'absorption du rayonnement térahertz par l'absorbeur 36. La surface à haute impédance 23 est réalisée en un matériau choisi parmi l'aluminium, le cuivre, l'or, entre autres, et présente une épaisseur comprise par exemple entre 50nm et 500nm, de préférence de l'ordre de 300nm.

Le détecteur thermique 1 comporte une membrane thermométrique 30, suspendue au-dessus du substrat de lecture 10 et ici de la surface à haute impédance 23 par des piliers d'ancrage 24, et isolée de celui-ci par des bras d'isolation thermique 25. Les piliers d'ancrage 24 et les bras d'isolation thermique 25 assurent également la connexion électrique du transducteur thermomètre au circuit de lecture 12 (ici via les piliers de connexion 22). Les piliers d'ancrage 24 sont réalisés en au moins un matériau électriquement conducteur, et sont connectés électriquement aux piliers de connexion 22 sous-jacents (et s'étendent ici à la verticale de ces derniers). Les bras d'isolation thermique 25 comportent une couche 33 réalisée en au moins un matériau électriquement conducteur, qui s'étend des piliers d'ancrage 24 jusqu'aux diodes D1, D2 en formant des pistes conductrices de polarisation permettant de polariser en tension les diodes thermomètres D1, D2 à une valeur V_{d} prédéfinie.

La membrane absorbante 30 comporte donc un transducteur thermométrique, formé ici de plusieurs diodes D1, D2..., appelées diodes thermomètres. Les diodes thermomètres D1, D2 reposent sur une couche inférieure isolante 31, réalisée par exemple en silicium amorphe ou en un autre matériau électriquement isolant, et est au contact de plots de polarisation 35, lesquels sont en contact électrique avec les pistes conductrices de polarisation 33.

Le transducteur thermomètre comporte au moins deux diodes thermomètres. Dans cet exemple, deux diodes thermomètres D1, D2 sont représentées, mais davantage de diodes peuvent être présentes, par exemple trois ou quatre diodes, en fonction notamment de la configuration des pistes conductrices de polarisation 33.

Les diodes thermomètres D1, D2 sont des diodes latérales, dans le sens où l'injection des porteurs de charge dans la jonction semiconductrice se fait de manière horizontale (sensiblement parallèle au plan XY) et non pas verticale (suivant l'axe Z). Elles sont formées d'une couche en un matériau semiconducteur cristallin, par exemple en silicium, formé de deux régions latérales dopées de type p (anode D1.1 pour la diode D1) et de type n (cathode D1.3), entre lesquelles se situe une région centrale (D1.2) non intentionnellement dopée ou faiblement dopée. Les régions latérales et centrale sont alignées dans le plan XY suivant un axe longitudinal (ici parallèle à l'axe X). Les deux régions latérales sont de préférence surdopées pour assurer un bon contact ohmique avec des plots de polarisation.

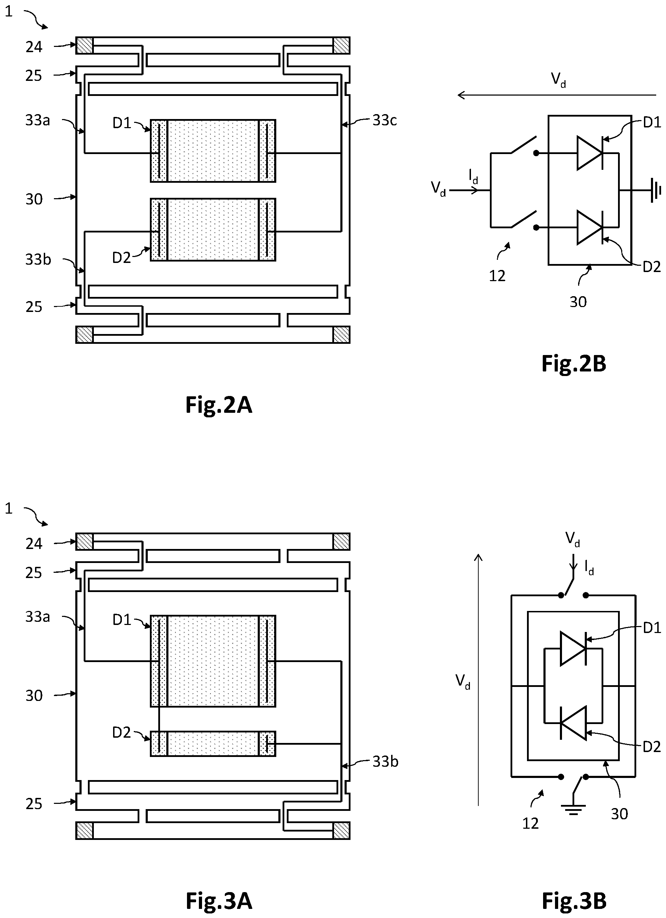

La couche semiconductrice de chaque diode thermomètre D₍ᵢ₎ présente une longueur L, une largeur W₍ᵢ₎ et une épaisseur e. De préférence, la longueur L est identique pour toutes les diodes thermomètres. De préférence également, l'épaisseur e est identique pour toutes les diodes thermomètres. De préférence, le niveau et le type de dopage des régions latérales et centrale sont identiques pour toutes les diodes thermomètres. Enfin, la largeur W₍ᵢ₎ des diodes thermomètres peut être identique ou non, selon le type de montage électrique. De préférence, la largeur d'une diode thermomètre est constante suivant son axe longitudinal. La largeur d'une diode thermomètre est définie comme étant la dimension de la couche semiconductrice dans le plan XY et suivant un axe orthogonal à l'axe longitudinal. Dans le cas d'un montage électrique symétrique comme ceux des fig.1C et 2B, la largeur des diodes thermomètres peut être identique ou différente d'une diode à l'autre. En revanche, dans le cas d'un montage électrique antisymétrique comme celui de la fig.3B (montage également appelé en tête bêche), alors la largeur W₍ᵢ₎ des diodes thermomètres est différente d'une diode à l'autre. Notons que dans un montage symétrique, les diodes thermomètres sont orientées de la même manière vis-à-vis de la tension appliquée, alors que dans un montage antisymétrique ou tête-bêche, les diodes présentent une orientation opposée l'une à l'autre vis-à-vis de la tension appliquée.

Les diodes thermomètres D1, D2 sont connectées, parallèles entre elles, au circuit de lecture 12, lequel est adapté à les polariser en tension en appliquant une valeur V_{d} prédéfinie. De plus, le circuit de lecture 12 est adapté à activer les diodes thermomètres D1, D2 (i.e. à les polariser dans le sens passant) indépendamment les unes des autres. Pour cela, le circuit de lecture 12 comporte au moins un interrupteur, ici deux interrupteurs. Dans cet exemple, le circuit de lecture 12 peut polariser, par l'actionnement des interrupteurs, l'une ou l'autre des diodes thermomètres, ou toutes les diodes thermomètres en même temps.

Les diodes thermomètres D1, D2 sont recouvertes d'une couche intermédiaire isolante 32. Les pistes conductrices de polarisation 33 s'étendent ici sur la couche intermédiaire isolante 32, et viennent au contact des plots de polarisation 35. Dans cet exemple, deux pistes conductrices 33 sont au contact électrique avec l'anode D1.1 et la cathode D1.3 de la diode thermomètre D1, et deux autres pistes conductrices 33 sont en contact électrique avec l'anode et la cathode de la diode thermomètre D2. Ici, chacun des quatre bras d'isolation thermique 25 est ici parcouru par une piste conductrice de polarisation 33.

Une couche supérieure isolante 34 recouvre les pistes conductrices 33 et les plots de polarisation 35. L'absorbeur 36 est formé par une antenne avec une charge résistive adaptée à son impédance (dipôle résistif) qui repose ici sur la couche supérieure isolante 34, et peut être revêtu par une couche de protection (non représentée). L'absorbeur 36 est adapté à dissiper de la chaleur par effet Joule lorsqu'il est parcouru par un courant électrique. Il est agencé dans la membrane absorbante 30 de manière à être en contact thermique avec les diodes thermomètres D1, D2 (couplage thermique), de sorte que la chaleur dissipée par effet Joule conduit à une augmentation de la température des diodes thermomètres D1, D2. On comprend que les diodes thermomètres du transducteur thermomètre sont couplées thermiquement l'une à l'autre : elles présentent donc la même température, que l'une et/ou l'autre des diodes thermomètres soient activées. L'absorbeur 36 est ici espacé et électriquement isolé des diodes thermomètres D1, D2 par la couche supérieure isolante 34, laquelle peut être réalisée par exemple en un oxyde ou nitrure de silicium et peut présenter une épaisseur par exemple de l'ordre de 10nm environ. Cependant, d'autres agencements de la charge résistive vis-à-vis des diodes thermomètres sont possibles. Elle peut ainsi être située sous les diodes thermomètres.

D'une manière générale, les diodes thermomètres D1, D2 et le circuit de lecture 12 sont configurés de manière à présenter au moins les deux configurations électriques suivantes (selon que toutes ou une partie des diodes thermomètres sont activées) : une première configuration où le courant électrique total I_{d} circulant dans le transducteur thermomètre (i.e. dans les diodes thermomètres polarisées dans le sens passant) présente une première valeur I_{d,1} ; et une deuxième configuration où le courant électrique total I_{d} présente une deuxième valeur I_{d,2} différente de I_{d,1}. Aussi, quelle que soit la configuration électrique, les diodes thermomètres présentent la même température, étant couplées thermiquement l'une à l'autre.

Dans cet exemple, les diodes thermomètres D1, D2 sont montées de manière symétrique, et le circuit de lecture 12 peut polariser l'une et/ou l'autre des diodes thermomètres D1, D2 de manière sélective. La diode thermomètre D1 présente une largeur W₁, et la diode thermomètre D2 présente une largeur W₂ inférieure à W₁. La tension V_{d} est appliquée au transducteur thermomètre. Trois configurations électriques sont alors possibles : une première configuration où les deux diodes thermomètres sont activées en même temps : le courant électrique total I_{d} circulant dans le transducteur thermomètre présente alors une valeur maximale I_{d,max}. Il est possible, dans une autre configuration, de n'activer que la seule diode D1, conduisant à un courant électrique total I_{d} présentant une valeur I_{d,1} inférieure à I_{d,max} ; et, dans une dernière configuration, de n'activer que la seule diode D2, conduisant à un courant électrique total I_{d} présentant une valeur I_{d,2} inférieure à I_{d,max} et à I_{d,1} : I_{d,2} < I_{d,1} < I_{d,max}.

Notons que, dans ces trois configurations du montage électrique, la densité de courant parcourant le transducteur thermomètre présente une même valeur J_{d}, de sorte que la résolution thermique ΔTₘᵢₙ du transducteur thermomètre reste constante. Aussi, le détecteur thermique 1 présente des performances en termes de sensibilité et de rapidité qui peuvent être ajustées compte tenu de l'application visée, sans pour autant dégrader la résolution thermique ΔTₘᵢₙ du transducteur thermomètre.

Ainsi, dans le cas de la détection d'un faible flux incident, on privilégiera la sensibilité du détecteur thermique 1 sur sa rapidité : on cherchera donc à augmenter l'auto-échauffement g_{AE} de la membrane absorbante 30, et donc la valeur du courant électrique total I_{d} : le circuit de lecture 12 polarisera la seule diode D1 ou de préférence les deux diodes D1 et D2 en même temps. En revanche, dans le cas de la détection d'une scène en déplacement, on privilégiera la rapidité du détecteur thermique 1 : on cherchera alors à limiter l'auto-échauffement g_{AE} de la membrane absorbante 30, et donc la valeur du courant électrique total I_{d} : le circuit de lecture 12 polarisera de préférence la seule diode D2. Un compromis peut toutefois être recherché entre la sensibilité et la rapidité du détecteur thermique 1 : aussi, le circuit de lecture pourra polariser la diode D1 seule. Il apparaît donc que le détecteur thermique 1 présente une grande versatilité de ses performances en termes de sensibilité et de rapidité, par le fait de contrôler l'activation des diodes thermomètres indépendamment les unes des autres, sans que cela se traduise par une dégradation de la résolution thermique ΔTₘᵢₙ du transducteur thermomètre.

La figure 2A est une vue schématique et partielle, en coupe transversale, d'un détecteur thermique 1 selon une variante de réalisation. La figure 2B illustre partiellement le circuit électrique équivalent des diodes thermomètres D1, D2 et du circuit de lecture 12.

Le détecteur thermique 1 se distingue de celui de la fig.1B essentiellement en ce que les diodes thermomètres D1, D2 présentent des largeurs identiques, et en ce qu'une même piste conductrice de polarisation 33c permet de porter les cathodes des diodes thermomètres D1, D2 à un même potentiel électrique.

Ainsi, le transducteur thermomètre comporte une diode D1 de largeur W1, et une diode D2 de largeur W2 égale à W1 (mais les largeurs W1 et W2 peuvent bien entendu être différentes).

Par ailleurs, une même piste conductrice de polarisation 33c s'étend sur l'un des bras d'isolation thermique, et vient au contact électrique de la cathode de la diode D1 et de celle de la diode D2. En revanche, une autre piste conductrice de polarisation 33a vient au contact électrique de l'anode de la diode D1, et une autre piste conductrice de polarisation 33b est au contact électrique de l'anode de la diode D2. Ainsi, le circuit de lecture 12, qui comporte ici des interrupteurs connectés en série, l'un avec la diode D1 et l'autre avec la diode D2, permet d'activer de manière sélective la diode D1 seule, la diode D2 seule, ou les deux diodes D1 et D2.

D'autres montages électriques sont évidemment possibles, comme le fait de prévoir une même piste conductrice de polarisation 33c pour les anodes des diodes D1 et D2, et deux autres pistes conductrices de polarisation 33a, 33b distinctes pour les cathodes.

Le détecteur thermique 1 selon cette variante de réalisation présente une meilleure isolation thermique de la membrane absorbante 30, dans la mesure où l'un des bras d'isolation thermique 25 ne comporte pas de piste conductrice de polarisation 33, ce qui améliore ses performances du détecteur thermique 1 en termes d'isolation thermique et donc de sensibilité.

La figure 3A est une vue schématique et partielle, en coupe transversale, d'un détecteur thermique 1 selon une autre variante de réalisation. La figure 3B illustre partiellement le circuit électrique équivalent des diodes thermomètres D1, D2 et du circuit de lecture 12.

Le détecteur thermique 1 se distingue de celui de la fig.1B essentiellement en ce que les diodes thermomètres D1, D2 sont montées en tête-bêche (toujours en parallèle), et en ce que deux seules pistes conductrices de polarisation 33a, 33b permettent d'appliquer une différence de potentiel aux diodes thermomètres.

Le transducteur thermomètre est donc formé de deux diodes D1 et D2 montées en tête-bêche (montage antisymétrique), dans le sens où ici la cathode de D1 et l'anode de D2 sont connectées à un même noeud du circuit électrique et sont donc portées à un même potentiel électrique, et en ce que l'anode de D1 et la cathode de D2 sont connectées à un autre même noeud du circuit électrique.

Les diodes thermomètres D1 et D2 étant montées en tête-bêche, elles présentent des largeurs différentes. Dans cet exemple, la largeur W1 est supérieure à la largeur W2.

Par ailleurs, une même piste conductrice de polarisation 33a s'étend dans un bras d'isolation thermique 25, et vient au contact électrique de l'anode de la diode D1 et à la cathode de la diode D2. Une autre piste conductrice de polarisation 33b s'étend dans un autre bras d'isolation thermique et vient au contact électrique de la cathode de D1 et à l'anode de la diode D2. D'autres montages électriques sont évidemment possibles. Deux va-et-vient permettent d'appliquer la tension de polarisation V_{d} aux diodes D1 et D2 dans un sens ou dans l'autre du montage électrique.

En fonctionnement, on applique une tension de polarisation V_{d} aux diodes montées en parallèle. En fonction du signe de la tension V_{d}, l'une des diodes est à l'état passant alors que l'autre est à l'état bloqué. Ainsi, on peut avoir une configuration électrique où la diode D1 seule est à l'état passant, de sorte que le courant électrique total I_{d} présente une valeur I_{d,1}, et une autre configuration électrique où la diode D2 seule est à l'état passant, de sorte que le courant électrique total I_{d} présente une valeur I_{d,2}, différent de I_{d,1} du fait de la différence entre les largeurs W₁ et W₂.

Le détecteur thermique 1 selon cette variante de réalisation présente une isolation thermique de la membrane absorbante encore plus élevée, dans la mesure où seuls deux bras d'isolation thermique sur les quatre bras d'isolation thermique comportent chacun une piste conductrice de polarisation 33, ce qui améliore ses performances du détecteur thermique 1 en termes d'isolation thermique et donc de sensibilité.

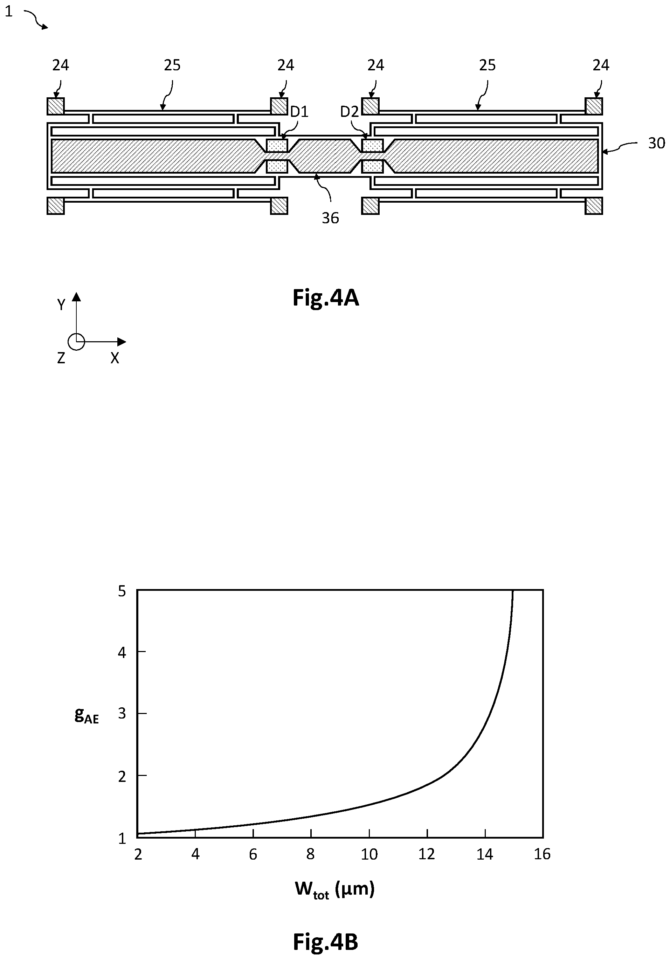

La figure 4A est une vue de dessus, schématique et partielle, d'un détecteur thermique 1 selon une autre variante de réalisation. La figure 4B illustre une évolution du gain d'auto-échauffement g_{AE} de la membrane absorbante 30 en fonction de la largeur cumulée Wₜₒₜ des diodes thermomètres activées.

Le détecteur thermique 1 est adapté ici à absorber dans la bande sub-térahertz, par exemple entre 100GHz et 1THz. La température de fonctionnement peut être de 80K environ de manière à minimiser la résolution thermique des diodes thermomètres.

La couche isolante 21 située entre le réflecteur 21 et la surface à haute impédance 23 présente une épaisseur de 11µm environ (cf. fig.1A). La surface à haute impédance 23 est réalisée par une couche d'aluminium. La membrane absorbante est espacée de 2.5µm environ de la surface à haute impédance 23.

L'absorbeur 36 (dipôle métallique) est réalisée ici en niobium. Le couplage entre la surface à haute impédance 23 et l'absorbeur 36 assure l'absorption du rayonnement térahertz. Dans cet exemple où l'on souhaite que le spectre d'absorption soit centré sur la fréquence de 425 GHz, l'absorbeur 36 présente une dimension de 6µm de largeur et 265µm de longueur. Avec ces dimensions, l'intégration de plusieurs diodes thermomètres D1, D2 est facilitée. Par ailleurs, les pistes conductrices de polarisation 33 sont ici réalisées en TiN, et les couches isolantes 31, 32, 34 sont réalisées en silicium amorphe.

La membrane absorbante 30 présente ici une forme rectangulaire avec un rapport de forme longueur sur largeur élevé. Quatre bras d'isolation thermique 25 assurent le maintien de la membrane absorbante 30. Deux diodes thermomètres D1, D2 sont situées dans une partie centrale de la membrane absorbante 30. L'absorbeur 36 présente, en regard des diodes thermomètres D1 D2, une largeur inférieure aux 6µm indiqués précédemment.

Les diodes thermomètres D1, D2 sont réalisées en silicium cristallin d'une épaisseur comprise par exemple entre 20nm et 300nm, par exemple égale à 50nm environ. La région latérale dopée n+ est dopée au phosphore, et la région latérale dopée p+ est dopée au bore. Le niveau de dopage est ici supérieur à 10¹⁹ cm⁻³ de manière à assurer un bon contact ohmique. Le niveau de dopage (de type n ou de type p) de la région centrale est ici compris entre 10¹⁵ et 10¹⁸ cm⁻³, par exemple égal à 10¹⁷ cm⁻³. Par ailleurs, la longueur de la région centrale est de préférence comprise entre 1 et 10µm, par exemple égale à 5µm, de manière à optimiser la résolution thermique.

Dans ces conditions, les diodes thermomètres D1, D2 présentent une résolution thermique ΔTₘᵢₙ, pour une tension de polarisation V_{d} de 1.02V environ (correspondant à une densité de courant de 2nA/µm), égale à 0.15mK environ, et un coefficient de température en courant (TCC) supérieur à 20%/K pour une densité de courant de 2nA/µm environ. La résistance thermique totale Rₜₕ est ici égale à 80 MK/W. Il est alors possible de déterminer l'auto-échauffement g_{AE} de la membrane absorbante 30, pour une puissance absorbée dans la bande spectrale de 1nW.

La figure 4B illustre un exemple de variation de l'auto-échauffement g_{AE} en fonction de la largeur cumulée Wₜₒₜ des diodes thermomètres activées par le circuit de lecture. La largeur totale correspond à la somme des largeurs des diodes thermomètres activées. On remarque que l'auto-échauffement g_{AE} reste proche de l'unité pour une largeur totale Wₜₒₜ inférieure à 7µm environ. Par ailleurs, pour une largeur totale des diodes polarisées de 14.2µm environ, un emballement thermique a lieu, qui est évidemment à éviter dans la mesure où il peut conduire à une dégradation des matériaux de la membrane absorbante. Cet emballement thermique a lieu lorsque la somme de la puissance absorbée et de la puissance générée par effet Joule dans la membrane absorbante est trop importante pour être évacuée par les bras d'isolation thermique.

Ainsi, en ajustant la largeur totale Wₜₒₜ par l'activation sélective des diodes thermomètres polarisées à une tension V_{d}, il est possible d'ajuster l'auto-échauffement g_{AE} pour privilégier la sensibilité et/ou la rapidité du détecteur thermique, sans pour autant dégrader la résolution thermique ΔTₘᵢₙ des diodes thermomètres.

Des modes de réalisation particuliers viennent d'être décrits. Différentes variantes et modifications apparaîtront à l'homme du métier.

## Revendications

1. Détecteur thermique (1) d'un rayonnement électromagnétique, comportant :
∘ un substrat de lecture (10), comportant un circuit de lecture (12) ;
∘ une membrane absorbante (30), suspendue au-dessus du substrat de lecture (10) et isolée thermiquement de celui-ci, et comportant un transducteur thermomètre connecté électriquement au circuit de lecture (12) et polarisé par ce dernier en tension à une valeur V_{d} et couplé thermiquement à la membrane absorbante (30) ;
∘ **caractérisé en ce que** le transducteur thermomètre est formé de plusieurs diodes thermomètres (D1, D2) connectées en parallèle et couplées thermiquement l'une à l'autre ;
∘ **en ce que** le circuit de lecture (12) est adapté à activer les diodes thermomètres (D1, D2) de manière sélective ;
∘ et **en ce que** les diodes thermomètres (D1, D2) et le circuit de lecture (12) sont configurés de manière à présenter au moins les deux configurations électriques suivantes : une première configuration où un courant électrique total I_{d} circulant dans le transducteur thermomètre polarisé à la tension V_{d} présente une première valeur I_{d,1} ; et une deuxième configuration où le courant électrique total I_{d} présente une deuxième valeur I_{d,2} différente de I_{d,1}.

2. Détecteur thermique (1) selon la revendication 1, dans lequel les diodes thermomètres (D1, D2) présentent chacune une largeur différente d'une diode thermomètre à l'autre.

3. Détecteur thermique (1) selon la revendication 1 ou 2, dans lequel les diodes thermomètres (D1, D2) sont des diodes latérales comportant chacune deux régions latérales dopées et une région centrale située, dans un plan parallèle au plan principal de la membrane absorbante (30), entre les deux régions latérales dopées.

4. Détecteur thermique (1) selon la revendication 3, dans lequel les diodes thermomètres sont réalisées en le même matériau semiconducteur cristallin.

5. Détecteur thermique (1) selon l'une quelconque des revendications 1 à 4, dans lequel la membrane absorbante (30) est maintenue suspendue par des bras d'isolation thermique (25) s'étendant jusqu'à des piliers d'ancrage (24), et dans lequel des pistes conductrices de polarisation s'étendent à partir des piliers d'ancrage (24) en passant par les bras d'isolation thermique (25) pour venir au contact électrique des diodes thermomètres (D1, D2).

6. Détecteur thermique (1) selon l'une quelconque des revendications 1 à 5, dans lequel les diodes thermomètres sont montées de manière symétrique, et présentent chacune une largeur identique ou non d'une diode thermomètre à l'autre.

7. Détecteur thermique (1) selon les revendications 5 et 6, dans lequel une même piste conductrice de polarisation est au contact électrique d'une anode ou d'une cathode d'au moins deux diodes thermomètres connectées selon un montage symétrique.

8. Détecteur thermique (1) selon l'une quelconque des revendications 1 à 5, dans lequel les diodes thermomètres sont montées de manière antisymétrique, et présentent chacune une largeur différente d'une diode thermomètre à l'autre.

9. Détecteur thermique (1) selon les revendications 5 et 8, dans lequel une même piste conductrice de polarisation est au contact électrique d'une anode et d'une cathode d'au moins deux diodes thermomètres connectées selon un montage antisymétrique.

10. Détecteur thermique (1) selon l'une quelconque des revendications 1 à 9, dans lequel le circuit de lecture (12) comporte au moins un interrupteur ou au moins un va-et-vient connecté aux diodes thermomètres pour activer les diodes thermomètres de manière sélective.

11. Détecteur thermique (1) selon l'une quelconque des revendications 1 à 10, adapté à détecter un rayonnement térahertz ou un rayonnement infrarouge.
